# EUROPEAN PATENT SPECIFICATION

(11) **EP 2 749 361 B1**
(45) Date of publication and mention of the grant of the patent: **22.03.2017**
(21) Application number: 12199796.9
(22) Date of filing: 31.12.2012
(51) Int. Cl.: F23G 5/027, B09B 3/00, B09C 1/06, F23G 7/14

(54) **Direct contact high temperature thermal desorption**
Thermische Hochtemperaturdesorption mit Direktkontakt
Désorption thermique haute température à contact direct

(43) Date of publication of application: 02.07.2014
(73) Proprietor: Savaterra Oy, 96300 Rovaniemi (FI)
(72) Inventor: Aho, Olli, 96300 Rovaniemi (FI)
(74) Representative: Kolster Oy Ab

(56) References cited:
- WO-A1-95/30453
- US-A- 4 922 841
- US-A- 5 744 691
- US-B1- 7 019 190

## Description

### Field

The invention relates to a direct contact high temperature thermal desorption. The desorption may be performed to contaminated soil, for example.

### Background

Often material, such as soil, becomes contaminated with oil, for example. In these cases it may be important to be able to separate the contaminants from the otherwise clean soil. This may be important from the point of view of the legislation and elimination of health and environmental risks, for example.

However, the current thermal desorption machinery, as the one disclosed in document WO 95/30453 A1, requires improvements from the point of view of security and safety of the operation, processing efficiency and reliability, for example.

### Brief description of the invention

According to an aspect of the invention, there is provided an apparatus specified in claim 1.

According to an aspect of the invention, there is provided a method as specified in claim 15.

According to an aspect of the invention, there is provided a direct contact high temperature thermal desorption device for processing contaminated material, comprising: a desorber configured to perform desorption of contaminated material with direct contact in order to release contaminants from the contaminated material; an oxidizer configured to oxidization of at least part of the contaminants; a conveying channel configured to convey the released contaminants downstream from the desorber to an oxidizer; and at least one fan, located between the desorber and the oxidizer, configured to generate negative pressure in the conveying channel between the desorber and the at least one fan in order to move the released contaminants downstream from the desorber.

According to an aspect of the invention, there is provided an apparatus comprising processing means configured to cause the apparatus to perform any of the embodiments as described in the appended claims.

According to an aspect of the invention, there is provided a computer program product embodied on a distribution medium readable by a computer and comprising program instructions which, when loaded into an apparatus, perform the controlling of the operation of the direct contact high temperature thermal desorption device.

According to an aspect of the invention, there is provided a computer-readable distribution medium carrying the above-mentioned computer program product.

Embodiments of the invention are defined in the dependent claims.

### List of drawings

In the following, the invention will be described in greater detail with reference to the embodiments and the accompanying drawings, in which
Figures 1 to 5 present examples of a direct contact high temperature thermal desorption device, according to some embodiments;
Figure 6 show an example fan, according to an embodiment; and
Figure 7 shows a method, according to an embodiment.

### Description of embodiments

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Thermal desorption has been commonly used for performing soil remediation. Thermal desorption is a process that uses either indirect or direct heat exchange to heat contaminants to a temperature high enough to volatilize and separate them from contaminated material. Air, combustion gas, or an inert gas is then used as the transfer medium for the vaporized components in such thermal desorption device for transferring contaminants from one phase/unit to another. Contamination in the material limits its present/future use. For example, it may cause health and environmental risks and conflict with the legislation requirements. The material may be contaminated with semi-volatiles, polycyclic aromatic hydrocarbons (PAH), polychlorinated biphenyl (PCB), pesticides, herbicides, volatiles, oil hydrocarbons, chlorophenols, polychlorinated dibenzo dioxins and dibenzofurans (PCDD/Fs), syanides, volatile metals (such as Hg), and heavy metals, for example.

Thermal desorption technologies may consist of two steps: (1) heating the contaminated material to volatize the (organic) contaminants, and (2) treating the exhaust gas stream to prevent emissions of the volatized contaminants to the atmosphere. The systems may be differentiated from each other by the methods used in heating the contaminated materials, and by the gas treatment system used to treat the contaminants, such as noxious gases.

Thermal desorption may be divided to a high temperature thermal desorption (HTTD) and to a low temperature thermal desorption (LTTD). The HTTD differs significantly from the LTTD in that the temperature applied in the HTTD is typically between 320-800 °C, whereas the used temperature in the LTTD is lower, such as around 90-320 °C. Further, the HTTD may be more versatilely used against many types of contaminants. For example, the costs compared to other types of treatment speak on the behalf of using such high temperature thermal treatment for the soil remediation.

Further, the thermal desorption may be divided to a direct contact desorption and to an indirect contact thermal desorption. In indirect contact devices the heat is applied indirectly to the contaminated material by transferring the heat from the source (e.g., combustion or hot oil) through a physical barrier, such as a steel wall, that separates the heat source from the contaminated materials. Systems employing this type of heat transfer may be thus referred to as indirect-contact or indirect-fired thermal desorption systems, as no direct flame is introduced to the contaminated material. An example of the desorption unit may be a thermal screw, such as screw conveyors or hollow augers, in which hot steam or oil indirectly heats the treated material via the walls of the desorption unit, for example.

However, in direct contact devices, a direct flame (or alternatively, superheated steam) is used to heat the contaminated material in order to remove the contaminants. Typically such direct contact thermal desorption devices apply a rotary drum for the desorption, i.e. as the unit in which the desorption takes place by the direct flame exposed to the contaminated material. The rotary drum/dryer may be a horizontal cylinder, for example. Another name for the direct contact device may be a direct fired or a direct heated device.

Further, as the direct heated device applies a direct flame inside the desorption unit, the composition of the contaminants may be very different from that of the indirect heated device. Thus, the direct heated device may require different and possibly more efficient further processing of the contaminants than the indirect heated device. For example, it may be that oil, used for providing the flame for direct heating, causes emissions which may need to be handled along with the contaminants emitted from the contaminated material. As is clear from above, such direct heated device for performing the remediation differs significantly from the indirect heated device both from the point of view of the desorption and from the point of view of the further processing of the released contaminants, such as noxious gases.

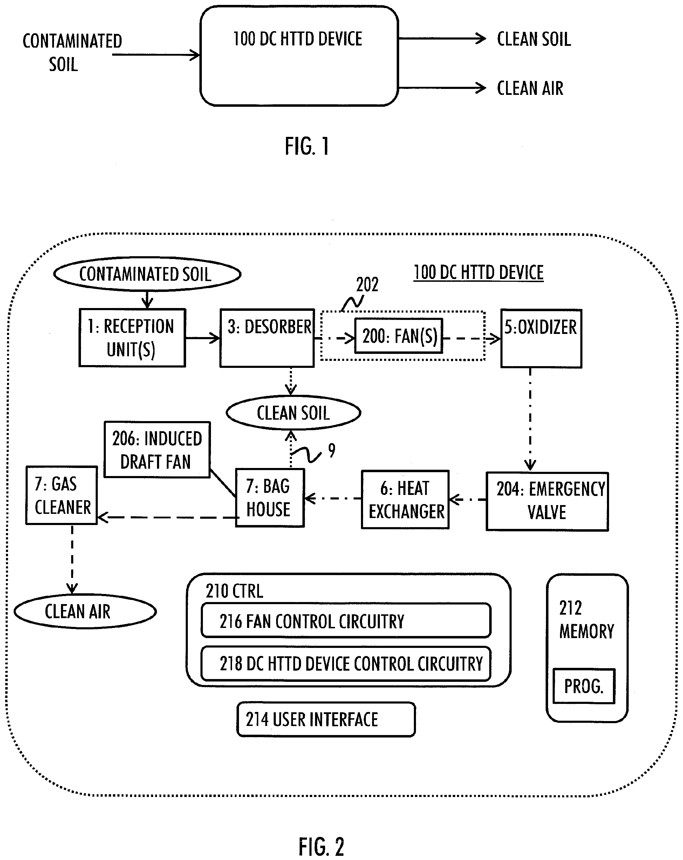

Let us in the following concentrate on the direct contact HTTD device. The direct contact HTTD may be performed by a machine/device 100 specifically designed for that purpose. It should be noted that such direct contact HTTD machine/device differs significantly from the one used in the LTTD or in an indirect contact device because there are certain operations that need to be performed for the material directly heated to high temperatures, for example. In a nutshell, the direct contact HTTD machine 100 may receive contaminated material, such as soil, at one end and release clean soil and clear air at the other end, as shown in Figure 1.

The high temperatures applied in the direct contact HTTD device 100 may be obtained by applying the direct flame to the contaminated soil, as explained. As the contaminated soil gets heated to the high temperature with direct flame, the emission control of contaminants is very important. Typically, the HTTD machine is closed so that the contaminants are not allowed to be released until the gases have been treated into clean air. However, closing or sealing the machine/device 100 reliably and completely may be very difficult. Especially in situations where large amount of gases become compressed in a closed space, even a smallest leak, for example in the corners of the closed space, may be hazardous. Moreover, if the machine is reliably closed and a malfunction of the machine 100 occurs, then the compressed gases may cause a danger of explosion, for example. Therefore, a reliable and secure operation of the machine 100 is highly important.

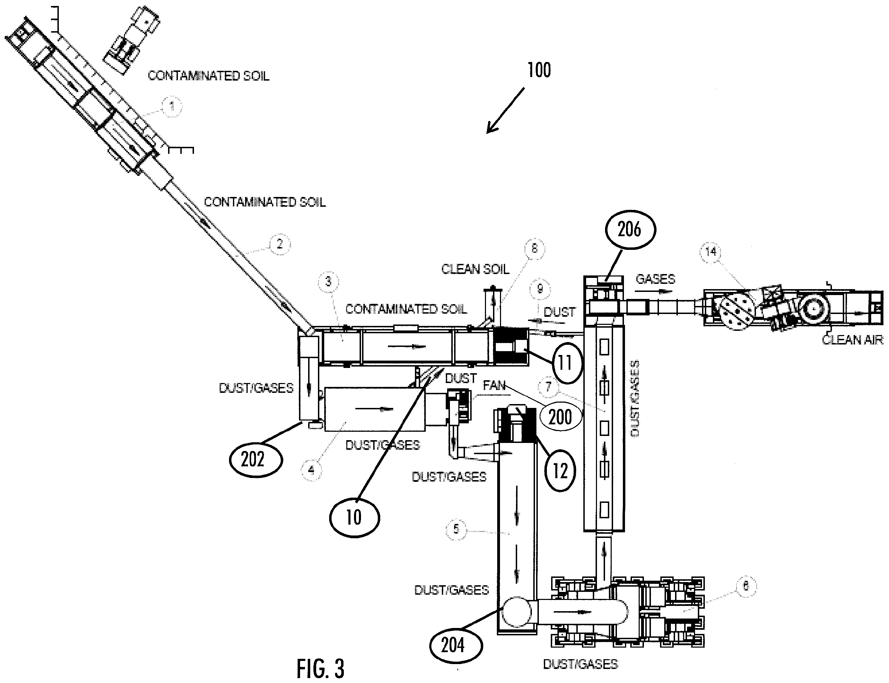

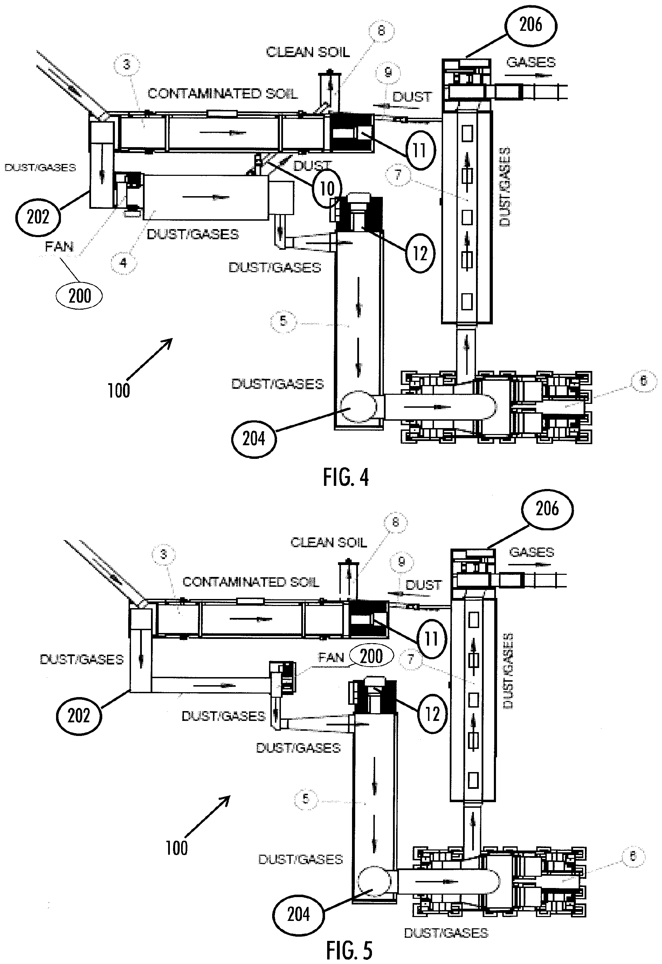

At least partly for this reason there is provided an improved direct contact (DC) HTTD device 100. Figures 2 to 5 show different embodiments of such device 100. The Figures show only the elements and functional entities required for understanding the embodiments. Other components have been omitted for reasons of simplicity. It should be noted though that Figures 4 and 5 do not show all the units of the HTTD device 100. However, the units not shown in Figures 4 and 5 are shown in Figure 3 and it may be understood that also the embodiments of Figures 4 and 5 comprise those units (although not shown). Regarding Figure 2, the solid arrows represent the movement of the contaminated material downstream in the system 100. The dash-dotted arrows represent the movement of released contaminants and dust/particulates downstream in the system 100. The dotted arrows represent the movement of the clean soil and clean dust/particulates in the system 100. The long-dashed arrows represent the movement of contaminants (such as noxious gases) downstream in the system 100. The short-dashed arrows represent the released clean air.

Let us now look at the DC HTTD device 100 more closely by referring to Figures 2 to 3. The DC HTTD device 100 takes, as said, the contaminated material, such as soil, as input. For this, the device 100 may comprise input means, such as one or more reception units 1. The material may be brought to the receptions unit(s) with mobile vehicles, for example. Each reception unit 1 may be for example an open container, a silo, a tank, a feed hopper, or any other unit capable of receiving material. It may also be a truck having a trailer or a like. The input means 1 may receive several different types of contaminated material, as there may be separate reception units 1 for each type of contaminated material, or one unit 1 may be divided into three portions, or the materials may be mixed together in one unit 1. In an embodiment, the capacity is adjusted according to concentration and quality of the pollutant and/or properties of the soil / material which are treated. As one example, objects larger than 10 cm may be removed by a sieve. There may be a weight present in the reception unit(s) 1 for measuring the amount of material inputted. Analogously, the DC HTTD device 100 may comprise output means 8 for outputting clean material without contaminants. The output means 8 may be an output delivery unit, for example.

In an embodiment, the input means 1 may be closed when no material is brought into the system 100. In another embodiment, the input means 100 is continuously open. In yet another embodiment, the input means 100 comprises a sealing element for sealing the reception unit(s) 1 from the atmosphere, yet still allowing new material to be inputted. Such sealing element may be, for example, an element employing a revolving door technique for the feed of contaminated material. Similar embodiments may be applied for the output means 8.

From the reception unit(s) 1, the contaminated soil may be conveyed with a charging conveyer 2, such as a belt conveyer, screw conveyer, etc. towards desorption means, such as a desorber 1. The desorber 3 may be responsible for the desorption of the contaminated material with direct fire/flame in order to release contaminants, such as noxious gases, from the contaminated material. In the DC HTTD this may take place by the utilization of high temperatures obtained with a direct flame, for example. The contaminants may be released from the contaminated soil in gaseous form, thereby rendering the soil clean and free of noxious gases. In other words, the contaminants transfer into off-gas which is directed to a thermal oxidizer 5, as will be described later. The output means 8 may be located at the end of the desorption means 3. The desorber 3 may be a rotating cylindrical drum/dryer. The rotation speed may be relatively slow, such as a few rotations per minute, so as to allow the gases enough time to be emitted from the contaminated soil. Total residence time of the contaminated material in the desorber may range from 3 to 15 minutes. The desorber 3 may be inclined towards the end where the clean soil is released from the output means 8. This point of release is shown in Figures 3 to 5, for example. Figures 3 to 5 also show arrows to indicate the direction in which the material/substance (contaminated soil, clean soil, contaminants, clean air) move downstream in the DC HTTD device 100.

The desorber 3 may also include an apparatus for providing the flame which causes the high temperatures directly to the contaminated material. The temperature for the desorption may, in an embodiment, be between 320 to 800 degrees in Celsius. A burner 11 for providing the flame may have a power of 20 MW, for example. In the embodiments shown in Figures 3 to 5, the flame is provided by the burner 11 located at the end of the drum 3, as shown in Figures 3 to 5. However, in another embodiment, the flame is located elsewhere in the desorber 3. For example, there may be multiple flames throughout the desorber 3. However, it should be noted that the air flow in the system may not be efficiently controlled by the flame(s).

As shown, the DC HTTD device 100 may comprise oxidizing means 5 for performing oxidization of at least part of the contaminants. The oxidizing means 5 may comprise an oxidizer, also known as an afterburner. Common properties of hydrocarbons are the facts that they produce steam, carbon dioxide and heat during combustion and that oxygen is required for combustion to take place. Thus, in order to transform the carbon-based contaminants into carbon dioxide, oxygen is needed. The temperature for the oxidization may, in an embodiment, be between 850 to 1100 degrees in Celsius. The high temperature may be obtained with a direct flame, for example. A burner 12 for providing the direct flame may be located at the input end of the oxidizer 5, as shown in Figures 3 to 5. In an embodiment, the oxidizer 5 may be a cylindrical drum. However, the oxidizer 5 need not rotate.

According to the proposed DC HTTD device 100, the device 100 comprises channeling means 202, such as a conveying channel, for conveying the released contaminants downstream from the desorption means 3 to the oxidizing means 5. Downstream denotes here the movement direction of the released contaminants, such as the noxious gases, in the DC HTTD device 100. As such, the DC HTTD device 100 may be understood as a train of different units/phases (desorber 3, oxidizer 5, etc.), wherein each unit performs certain operation(s) with respect to the contaminated material/contaminants. The channeling means 202 may comprise a pipe, tube, or a duct, a channel, a canal, for example. The channel 202 may be hollow so as to allow the noxious gases to move in the channel 202 towards the oxidizer 5. Naturally, there may be a similar channeling means 202 between any units of the system, although not depicted explicitly in Figure 2.

As said earlier, air flow in the system 100 may be used to carry the released components phase/unit to another. In an embodiment, part of the air flow may be provided by the blow of the flame(s) and by applying an induced drafting means 206 at the other end of the device 100 for generating negative pressure to the DC HTTD device 100. Negative pressure here denotes pressures below the standard atmospheric pressure of 101 kPa. As the contaminants are volatized, they may be drawn downstream by the induced-draft fan 206. However, such use of the induced-draft fan 206 may not be sufficient from the point of view of efficiency, reliability and safety of the system.

Therefore, according to the proposed DC HTTD device 100, the DC HTTD device 100 comprises air drafting means 200 located between the desorption means 3 and the oxidizing means 5. The air drafting means 200 may be for generating negative pressure (i.e. low pressure) in the channel 202 between the desorption means 3 and the air drafting means 200. The negative pressure may be due to the air draft caused by the air drafting means 200. That is, as air is pulled from the area before the air drafting means 200 and pushed to the area after the air drafting means 200, a negative pressure may be formed in the area before the air drafting means 200. The reason for providing such negative pressure to this region may be to move the released contaminants efficiently downstream from the desorption means 3, that is, to remove the emitted contaminants away from the desorber 3 to the channeling means 202 and further to the oxidizer 5. The negative pressure, i.e. low pressure or depression, may mean that in that region the atmospheric pressure is lower than that of surrounding locations. In an embodiment, the generated negative pressure may be 0,5 bar or less. In an embodiment, the negative pressure created at least partly by the air drafting means 200 is 0,3 or 0,4 bar. In other words, the pressure is below the standard atmospheric pressure of approximately 1 bar. The amount of power needed for causing such negative pressure may be empirically derived or automatically controlled in the device 100 by the help of pressure sensors and computer-aided process.

There may be a variety of possible air drafting means 200. In an embodiment, the air drafting means 200 comprises at least one fan or at least one blower. The at least fan 200 may be located inside the channel 202. Thus, the at least one fan may be called a channel fan/blower. It may be invisible from the outside. In another embodiment, the fan 200 may be located between two channels, both comprised in the channeling means 202. That is, it may connect two channels together: a first channel from the desorber 3 to the fan and a second channel from the fan to the oxidizer 5, for example.

In an embodiment, the air drafting means 200 do not utilize outside air. In other words, it generates an air suction effect to the inside space of the channel 202 before the air drafting means 200 in the upstream direction and simultaneously generates a blowing effect to the inside space of the channel 202 after the air drafting means 200 in the downstream direction. It need not bring any extra air to the system from the outside but move the air (and the noxious contaminants and dust) inside the system 100.

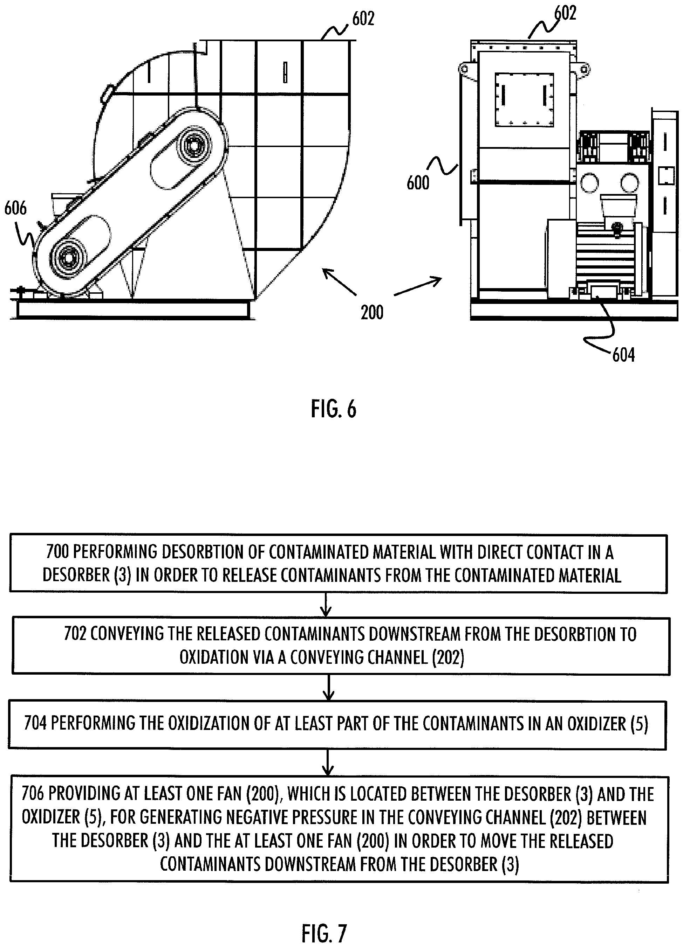

An example of a fan as the air drafting means 200 is shown in Figure 6. The left-hand side of Figure 6 shows the fan 200 from a side view, whereas the right-hand side of Figure 6 shows the same fan 200 from the front (or ninety degrees turned compared to the left-hand side of Figure 6). This example fan 200 may stand on the surface of the ground. The fan 200 may comprise a motor 604, such as an electric motor or a motor with a combustion engine. The engine 604 may apply a belt 606 or alike for power transmission. At the other end of the belt 606 there may be a fan element for providing the air displacement, such as a fan blower, fan ventilator, helical blower, propeller fan, screw fan, or a like which may be directly in contact with the air and contaminants inside the channel 202.

An input port for the channel 202 carrying the contaminants is marked with a reference numeral 600 in the right-hand side Figure and the output port is marker with a reference numeral 602 in the same Figure. The channel attached to the input port 600 may come from the desorber 3 (as in Figures 2, 4, and 5), or from separating means 4 (as in Figure 3, will be described later). The channel attached to the output port 602 may lead directly to the oxidizer 5 (as in Figures 2, 3, and 5), or to the separating means 4 (as in Figure 4). It may be understood that there are two conveying channels 202 connected with the air drafting means 200, as indicated above, or it may be understood that the part between the input port 600 and the output port 602 is comprised in the channeling means 202, such as in the single conveying channel 202.

In an embodiment, the air drafting means 200 may further move/displace the contaminants from the channeling means 202 downstream towards the oxidizing means 5 (to the oxidizer 5 directly or via the separating means 4 to the oxidizer 5). This displacement may advantageously take place by the generated negative pressure and a wind effect caused by the air drafting means 200.

In an embodiment, the air drafting means 200 may be used in controlling the negative pressure in the channeling means 202. This may be done for controlling the fed of contaminants to the oxidizing means 5. By doing such control, the efficiency of the device 100 may be increased. For example, with higher power applied to the fan 200, the amount of contaminants removed away from the desorber 202 is increased, and vice versa. There may be a detector, such as a weight detector, in the input means 1 for detecting the amount of contaminated material provided. Further there may be a detector for detecting the amount of contaminant gases emitted from the contaminated soil. Further, there may be a pressure sensor for detecting the pressure in the channel 202 and or in the desorber 3. Each of these detectors alone or combined may be used for determining whether the power of the fan is to be decreased or increased, or kept the same. The power of the fan may be controlled with a computer-aided process, for example.

The utilization of such interspace air drafting means 200 may be advantageous because it may improve the capacity and efficiency for processing the contaminants, such as the gases, and further aid in generating a smooth and uniform fed of gases to the oxidizer 5. In this manner, the mass balance of the system 100 may be controlled with more accuracy. The air flow in the device 100 may be, for example, from 60 000 to 90 000 m³/h. It may further increase the handling of various sorts of contaminated materials, such as highly dusting constructional waste. This maybe because, by applying the air drafting means 200, the gases/dust/particulates from the contaminated material may be more efficiently removed from the desorber 3. As said earlier, it may be very difficult to completely and reliably seal the desorber drum 3. Thus, it may be very important to efficiently remove the gases/dust from the drum 3 so that the gases do not leak out of the drum 3 from possible leakages in the drum 3.

It should be noted that as the air drafting means 200 is applied for removing the gases from the oxidizer 5, the air draft may carry also dust and particulates of the material away from the desorber 3. Such dust and particulates may already be clean material as it has been exposed to the direct flame in the desorber 3. In an embodiment, the DC HTTD device 100 further comprises the separating means 4 for separating particles, which are large enough according to a predetermined criterion, from particulates present in the air flow of the contaminants. The separating means 4 is located between the desorption means 3 and the oxidizing means 5. The separating means may comprise, for example, a cyclone, as known to a person skilled in the art. In an embodiment, there may further be conveying means 10, such as a pipe, a screw conveyer, etc. for conveying separated particulates from the separating means 4 to the output means 8. The treated particulates may be re-combined with the clean material, such as the soil. The outputted dry material may be wetted to prevent dusting outdoors.

In an embodiment, as shown in Figure 4, the air drafting means 200 is located between the desorption means 3 and the separating means 4. In another embodiment, as shown in Figure 3, the air drafting means 200 is located between the separating means 4 and the oxidizing means 5. In yet one embodiment, as shown in Figures 2 and 5, the air drafting means 200 is located directly between the desorption means 3 and the oxidizing means 5, without any separating means 4. The separating means 4 maybe left out or bypassed, for example, on the basis of the properties of the contaminated material to be processed.

In an embodiment, the DC HTTD device 100 further comprises an emergency valve 204 which may be located downstream after the air drafting means 200. In one embodiment, the emergency valve 204 is located on the oxidizer 5 or downstream after the oxidizer 5. In an embodiment, it is located directly after the oxidizer 5. The valve 204 may be configured to provide a direct access from the inside of the device 100 to the atmosphere when pressure in the DC HTTD device 100 is detected to be high according to a predetermined criterion. Such direct access may be provided by opening the valve due to the high pressure inside the device 100 or by detecting the pressure inside the device 100 with a pressure sensor and by automatically opening the valve 204 with a computer-aided process.

In an embodiment, the air drafting means 200 may continue generating the negative pressure (even) when the emergency valve 204 is opened. Thereby ensuring that the contaminants are removed downstream away the desorption means 3. This may be highly important from the point of view of the safety for the persons nearby the device 100. For example, let us assume a scenario without the proposed air drafting means 200. Imagine that the valve 204 opens up due to the increased pressure in the device 100 and a direct access to the atmosphere is provided. Then the induced-draft fan 206 located downstream of the valve 204 is not able to provide the negative pressure, for example, to the desorber 3 which is located upstream of the valve 204. Let us further assume that the contaminated material is nevertheless brought to the system 100 and the burner applies a direct flame to the material in the desorber 3. In such case, the emitted noxious gases may not get displaced out of the desorber 3, but the amount noxious gases increase in the desorber 3. In this case there may be leaks of the noxious gases to the atmosphere, for example. Further, as even more significant problem related to such scenario the vast amount of noxious gases in the desorber 3 may be continuously exposed to the direct flame, thus causing a risk of explosion. However, by applying the air drafting means 200 in the location as described above, the operation of the fan 200 ensures that the noxious gases are removed out of the desorber 3 even in the scenario as depicted above. This significantly reduces or even removes the risk of explosion and gas leaks to the atmosphere.

In an embodiment, the DC HTTD device 100 further comprises, although not shown, second oxidizing means, such as a second oxidizer/afterburner, for performing oxidization of at least part of the released contaminants. Thus, there may be many afterburners, depending on the amount and properties of contaminants/contaminated material, and/or depending on the input feed rate of the contaminated material. For example, if the oil concentration in the contaminants increase (possibly from using high amount of fuel in the burner of the desorber 3), there may be a need for more efficient oxidization of the contaminants.

The device 100 may then further comprise second channeling means, such as a pipe, channel, tube, etc., for conveying part of the released contaminants downstream from the desorption means 3 to the second oxidizing means 5. In addition, there may be second air drafting means, such as at least one fan/blower, which is located between the desorber 3 and the second oxidizer 5. The second air drafting means may be for generating negative pressure in the second channeling means between the desorber 3 and the second air drafting means in order to remove the contaminants downstream from the desorber 3.

Looking at the DC HTTD device 100 further, the device 100 may further comprise cooling means or heat exchanging means 6, located after the oxidizing means 5, for cooling the temperature of the oxidized contaminants. In an embodiment, the cooling means 6 cools down the noxious gases to approximately 200 degrees in Celsius. The cooling means may comprise any gas cooler known to person skilled in the art, for example.

The device 100 may further comprise second separating means 7, which is located after the cooling means 6. The purpose of the second separation means 7 may be to separate particulates, e.g. dust, from the contaminants. The second separating means 7 may be called a baghouse as it may apply bags to collect the dust from the air flow. That is, basically the second separating means 7 is a filter for reducing emissions. As bags are used, it may be required that the maximum temperature of the flowing contaminants and dust is 200 degrees before the baghouse 7. For this reason, it may be important that the gas cooler 6 is applied as one unit preceding the baghouse in the high temperature thermal desorption devices, such as in the proposed device 100. The system 100 may thus treat high-boiling-point contaminants because the desorber 3 may heat the contaminated materials to higher temperatures without damaging the baghouse 7

As dust is being collected also here in the unit 7, there may further be conveying means 9 for conveying separated particulates from the second separating means 7 to the output means 8. The conveying means 9 may be, for example, a pipe, a tube, or a screw conveyer between the baghouse 7 and the output means 8.

As said, the induced drafting means 206, such as an induced-draft fan or fans may be located, for example, after the second separating means 7 (after the baghouse 7).

Further, as shown in the Figures, the DC HTTD device 100 may comprise scrubber means 14 for providing clean air from the oxidized contaminants. For example, a wet scrubber may be used in which the air flow with contaminants is directed against a water spray. Such acid gas neutralization system may control emissions of contaminants to the atmosphere As a result, e.g. sulphur dioxide may be removed from the contaminants. Finally, there may be air output means for outputting clean air.

Figure 7 shows a method for processing contaminated material in a direct contact high temperature thermal desorption device 100. The method may comprise, in step 700, performing desorption of contaminated material with direct contact in a desorber 3 in order to release contaminants from the contaminated material. In step 702, conveying the released contaminants downstream from the desorption to oxidation via a conveying channel 202. In step 704 the method may proceed by performing the oxidization of at least part of the contaminants in an oxidizer 5. In step 706, at least fan 200 is provided. The fan 200 is located between the desorber 3 and the oxidizer 5. The fan 200 may be for generating negative pressure in the conveying channel 202 between the desorber 3 and the at least one fan 200 in order to move the contaminants downstream away from the desorber 3.

The device 100 may advantageously be a mobile unit allowing the remediation to take place on-site or off-site. The mobility of the device 100 may pose restrictions for the device 100. For example, the material used for the device 100, the seals (e.g. in the desorber 3), and connections between different units (desorber, cyclone, oxidizer, cooler, baghouse, wet scrubber) need to be robust enough to withstand movements. The size of the DC HTTD device 100 may be, for example, around 50 meters times 75 meters. Thus, it is clear that the device 100 may need to be taken into parts for transportation.

The operation of the DC HTTD device (or plant) 100 may be monitored with real-time instrumentation. To ensure high quality of the operation, material samples may be taken on-site. For even further quality control, the field tests may be time-to-time verified by independent laboratory tests. Only soil that is guaranteed to be clean by the laboratory test may be delivered further. The throughput of the device 100 may be 40-80 tons per hour.

The device may further comprise a control circuitry (CTRL) 210, such as at least one processor, and at least one memory 212 including a computer program code (PROG), wherein the at least one memory 212 and the computer program code (PROG), are configured, with the at least one processor 210, to cause the DC HTTD device 100 to carry out controlling of the device 100 via computer-aided processes. The CTRL 210 may communicate, such as send commands to the flame burner(s) 11 and 12, to the fan 200, etc. via communication interface comprising hardware and/or software for realizing communication connectivity according to one or more communication protocols.

The control circuitry 210 may comprise a fan control circuitry 216 for controlling the fan usage, such as the power of the fan, according to any of the embodiments. The (plurality of) detector(s) may aid in controlling the fan 200, for example. The control circuitry 210 may comprise a DC HTTD device control circuitry 218 for controlling the process of the device 100, such as the temperature of the direct flame for example depending on the amount and type of contaminated material, the operation of the emergency valve 204, for example.

There may also be a user interface 214 comprising, for example, at least one keypad, a microphone, a touch display, a display, a speaker, etc. The user interface 214 may be used to control the DC HTTD device 100 by the user.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Some embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. Coding of software for carrying out the embodiments as shown and described is well within the scope of a person of ordinary skill in the art.

## Claims

1. A direct contact high temperature thermal desorption device (100) for processing contaminated material, comprising:
desorption means (3) for performing desorption of contaminated material with direct contact in order to release contaminants from the contaminated material;
oxidizing means (5) for performing oxidization of at least part of the contaminants;
channeling means (202) for conveying the released contaminants downstream from the desorption means (3) to the oxidizing means (5), the device being further **characterized by** comprising :
air drafting means (200), located between the desorption means (3) and the oxidizing means (5), for generating negative pressure in the channeling means (202) between the desorption means (3) and the air drafting means (200) in order to move the released contaminants downstream from the desorption means (3); and
controlling means (210) for determining whether the power of the air drafting means (200) is to be decreased, increased, or kept the same, on the basis of information from at least one sensor.

2. The direct contact high temperature thermal desorption device (100) of claim 1, wherein the sensors comprise at least one of the following: a weight sensor for detecting the amount of input contaminated material, a sensor for detecting the amount of contaminant gases emitted, a pressure sensor for detecting the pressure in the channeling means (202).

3. The direct contact high temperature thermal desorption device (100) of any of claims 1 to 2, wherein the air drafting means (200) is configured to displace the contaminants from the channeling means (202) downstream towards the oxidizing means (5) by the negative pressure and a wind effect caused by the air drafting means (200).

4. The direct contact high temperature thermal desorption device (100) of any of claims 1 to 3, wherein the air drafting means (200) comprises at least one fan or at least one blower.

5. The direct contact high temperature thermal desorption device (100) of any of claims 1 to 4, wherein the air drafting means (200) is for controlling the negative pressure in the channeling means (202), thereby controlling the fed of contaminants to the oxidizing means (5).

6. The direct contact high temperature thermal desorption device (100) of any of claims 1 to 5, wherein temperature for the desorption is between 320 to 800 degrees in Celsius and temperature for the oxidization is between 850 to 1100 degrees in Celsius.

7. The direct contact high temperature thermal desorption device (100) of any of claims 1 to 6, wherein the direct contact high temperature thermal desorption device (100) further comprises:
separating means (4) for separating particles, which are large enough according to a predetermined criterion, from particulates present among the contaminants, wherein the separating means (4) is located between the desorption means (3) and the oxidizing means (5).

8. The direct contact high temperature thermal desorption device (100) of claim 7, wherein the air drafting means (200) is located between the desorption means (3) and the separating means (4).

9. The direct contact high temperature thermal desorption device (100) of claim 7, wherein the air drafting means (200) is located between the separating means (4) and the oxidizing means (5).

10. The direct contact high temperature thermal desorption device (100) of any of claims 1 to 9, wherein the direct contact high temperature thermal desorption device (100) further comprises:
an emergency valve (204), located downstream after the air drafting means (200), configured to provide a direct access to the atmosphere when pressure in the direct contact high temperature thermal desorption device (100) is detected to be high according to a predetermined criterion.

11. The direct contact high temperature thermal desorption device (100) of claim 10, wherein the air drafting means (200) is configured to continue generating the negative pressure when the emergency valve (204) is open, thereby ensuring that the contaminants are removed downstream away from the desorption means (3).

12. The direct contact high temperature thermal desorption device (100) of any of claims 1 to 11, wherein the direct contact high temperature thermal desorption device (100) further comprises:
second oxidizing means for performing oxidization of at least part of the contaminants;
second channeling means for conveying part of the released contaminants from the desorption means (3) downstream to the second oxidizing means (5); and
second air drafting means, located between the desorption means (3) and the second oxidizing means (5), for generating negative pressure in the second channeling means between the desorption means (3) and the second air drafting means in order to move the released contaminants downstream from the desorption means (3).

13. The direct contact high temperature thermal desorption device (100) of any of claims 1 to 12, wherein the direct contact high temperature thermal desorption device (100) further comprises:
cooling means (6), located after the oxidizing means (5), for cooling the temperature of the oxidized contaminants;
second separating means (7), located after the cooling means (6), for separating particulates from the contaminants; and
induced drafting means (206), located after the second separating means (7), for generating negative pressure to the direct contact high temperature thermal desorption device (100).

14. The direct contact high temperature thermal desorption device (100) of any of claims 1 to 13, wherein the direct contact high temperature thermal desorption device (100) further comprises:
input means (1) for receiving the contaminated material and output means (8) for outputting clean material without contaminants; and
conveying means (10, 9) for conveying separated particulates from the separating means (4) to the output means (8) and from the second separating means (7) to the output means (8).

15. A method for processing contaminated material in a direct contact high temperature thermal desorption device (100), comprising:
performing desorption of contaminated material with direct contact in a desorber (3) in order to release contaminants from the contaminated material;
conveying the released contaminants downstream from the desorption to oxidation via a conveying channel (202);
performing the oxidization of at least part of the contaminants in an oxidizer (5), the method being further **characterized by**
providing at least one fan (200), which is located between the desorber (3) and the oxidizer (5), for generating negative pressure in the conveying channel (202) between the desorber (3) and the at least one fan (200) in order to move the released contaminants downstream from the desorber (3); and
determining whether the power of the air drafting fan (200) is to be decreased, increased, or kept the same, on the basis of information from at least one sensor.

## Patentansprüche

1. Direkt-Kontakt-Hoch-Temperatur-Thermo-Desorptionsvorrichtung (100) zum Verarbeiten von kontaminiertem Material, umfassend:
Desorptionsmittel (3) zum Ausführen von Desorption von kontaminiertem Material bei direktem Kontakt, um Kontaminanten aus dem kontaminierten Material freizusetzen;
oxidierende(s) Mittel (5) zum Ausführen von Oxidation von mindestens einem Teil der Kontaminanten;
kanalisierende(s) Mittel (202) zum Transportieren der freigesetzten Kontaminanten stromabwärts von dem/den Desorptionsmittel(n) (3) zu dem/den oxidierenden Mittel(n) (5), wobei die Vorrichtung weiterhin **gekennzeichnet ist durch** umfassend:
Luft ziehende(s) Mittel (200), angeordnet zwischen dem/den Desorptionsmittel(n) (3) und dem/den oxidierenden Mittel(n) (5), zum Erzeugen negativen Drucks in dem/den kanalisierenden Mittel(n) (202) zwischen dem/den Desorptionsmittel(n) (3) und dem/den Luft ziehenden Mittel(n) (200), um die freigesetzten Kontaminanten stromabwärts von dem/den Desorptionsmittel(n) (3) zu bewegen; und
Steuerungsmittel (210) zum Bestimmen, ob die Leistung des/der Luft ziehenden Mittel(s) (200) gesenkt, erhöht oder gleich gehalten werden soll, auf der Basis der Information von mindestens einem Sensor.

2. Direkt-Kontakt-Hoch-Temperatur-Thermo-Desorptionsvorrichtung (100) nach Anspruch 1, wobei die Sensoren mindestens einen der nachstehenden umfassen: einen Gewichtssensor zum Nachweisen der Menge an hereinkommendem kontaminiertem Material, einen Sensor zum Nachweisen der Menge von emittierten verunreinigten Gasen, einen Drucksensor zum Nachweisen des Drucks in dem/den kanalisierenden Mittel(n) (202).

3. Direkt-Kontakt-Hoch-Temperatur-Thermo-Desorptionsvorrichtung (100) nach einem der Ansprüche 1 bis 2, wobei das Luft ziehende Mittel (200) ausgelegt ist, um die Kontaminanten von dem/den kanalisierenden Mittel(n) (202) stromabwärts zu dem/den oxidierenden Mittel(n) (5) durch den negativen Druck und einen Windeffekt, verursacht durch das Luft ziehende Mittel (200), zu verdrängen.

4. Direkt-Kontakt-Hoch-Temperatur-Thermo-Desorptionsvorrichtung (100) nach einem der Ansprüche 1 bis 3, wobei das Luft ziehende Mittel (200) mindestens einen Lüfter oder mindestens ein Gebläse umfasst.

5. Direkt-Kontakt-Hoch-Temperatur-Thermo-Desorptionsvorrichtung (100) nach einem der Ansprüche 1 bis 4, wobei das Luft ziehende Mittel (200) zum Steuern des negativen Drucks in dem/den kanalisierenden Mittel(n) (202) vorliegt, wodurch die Zuführung von Kontaminanten zu dem/den oxidierenden Mittel(n) (5) gesteuert wird.

6. Direkt-Kontakt-Hoch-Temperatur-Thermo-Desorptionsvorrichtung (100) nach einem der Ansprüche 1 bis 5, wobei die Temperatur für die Desorption zwischen 320 bis 800°C liegt und die Temperatur für die Oxidation zwischen 850 bis 1100°C liegt.

7. Direkt-Kontakt-Hoch-Temperatur-Thermo-Desorptionsvorrichtung (100) nach einem der Ansprüche 1 bis 6, wobei die Direkt-Kontakt-Hoch-Temperatur-Thermo-Desorptionsvorrichtung (100) weiterhin umfasst:
Trennmittel (4) zum Abtrennen von Teilchen, welche gemäß einem vorbestimmten Kriterium groß genug sind, von teilchenförmigen Stoffen, die unter den Kontaminanten vorliegen, wobei das Trennmittel (4) zwischen dem/den Desorptionsmittel(n) (3) und dem/den oxidierenden Mittel(n) (5) angeordnet ist.

8. Direkt-Kontakt-Hoch-Temperatur-Thermo-Desorptionsvorrichtung (100) nach Anspruch 7, wobei das Luft ziehende Mittel (200) zwischen dem/den Desorptionsmittel(n) (3) und dem/den Trennmittel(n) (4) angeordnet ist.

9. Direkt-Kontakt-Hoch-Temperatur-Thermo-Desorptionsvorrichtung (100) nach Anspruch 7, wobei das Luft ziehende Mittel (200) zwischen dem/den Trennmittel(n) (4) und dem/den oxidierenden Mittel(n) (5) angeordnet ist.

10. Direkt-Kontakt-Hoch-Temperatur-Thermo-Desorptionsvorrichtung (100) nach einem der Ansprüche 1 bis 9, wobei die Direkt-Kontakt-Hoch-Temperatur-Thermo-Desorptionsvorrichtung (100) weiterhin umfasst:
ein Notventil (204), angeordnet stromabwärts nach dem/den Luft ziehenden Mittel(n) (200), ausgelegt, um einen direkten Zugang zu der Atmosphäre bereitzustellen, wenn ein Druck in der Direkt-Kontakt-Hoch-Temperatur-Thermo-Desorptionsvorrichtung (100) nachgewiesen wird, der gemäß einem vorbestimmten Kriterium zu hoch ist.

11. Direkt-Kontakt-Hoch-Temperatur-Thermo-Desorptionsvorrichtung (100) nach Anspruch 10, wobei das Luft ziehende Mittel (200) ausgelegt ist zum fortgesetzten Erzeugen des negativen Drucks, wenn das Notventil (204) offen ist, wodurch gewährleistet wird, dass die Kontaminanten stromabwärts weg von dem/den Desorptionsmittel(n) (3) entfernt werden.

12. Direkt-Kontakt-Hoch-Temperatur-Thermo-Desorptionsvorrichtung (100) nach einem der Ansprüche 1 bis 11, wobei die Direkt-Kontakt-Hoch-Temperatur-Thermo-Desorptionsvorrichtung (100) weiterhin umfasst:
zweite(s) oxidierende(s) Mittel zum Ausführen der Oxidation von mindestens einem Teil der Kontaminanten;
zweite(s) kanalisierende(s) Mittel zum Transportieren eines Teils der freigesetzten Kontaminanten von dem/den Desorptionsmittel(n) (3) stromabwärts zu dem/den zweiten oxidierenden Mittel(n) (5); und
zweite(s) Luft ziehende(s) Mittel, angeordnet zwischen dem/den Desorptionsmittel(n) (3) und dem/den zweiten oxidierenden Mittel(n) (5), zum Erzeugen von negativem Druck in dem/den zweiten kanalisierenden Mittel(n) zwischen dem/den Desorptionsmittel(n) (3) und dem/den zweiten Luft ziehenden Mittel(n), um die freigesetzten Kontaminanten stromabwärts von dem/den Desorptionsmittel(n) (3) zu bewegen.

13. Direkt-Kontakt-Hoch-Temperatur-Thermo-Desorptionsvorrichtung (100) nach einem der Ansprüche 1 bis 12, wobei die Direkt-Kontakt-Hoch-Temperatur-Thermo-Desorptionsvorrichtung (100) weiterhin umfasst:
Kühlmittel (6), angeordnet nach dem/den oxidierenden Mittel(n) (5), zum Kühlen der Temperatur der oxidierten Kontaminanten;
zweite(s) Trennmittel (7), angeordnet nach dem/den Kühlmittel(n) (6), zum Abtrennen von teilchenförmigen Stoffen von den Kontaminanten; und
induzierte(s) Zugmittel (206), angeordnet nach dem/den zweiten Trennmittel(n) (7), zum Erzeugen von negativem Druck für die Direkt-Kontakt-Hoch-Temperatur-Thermo-Desorptionsvorrichtung (100).

14. Direkt-Kontakt-Hoch-Temperatur-Thermo-Desorptionsvorrichtung (100) nach einem der Ansprüche 1 bis 13, wobei die Direkt-Kontakt-Hoch-Temperatur-Thermo-Desorptionsvorrichtung (100) weiterhin umfasst:
Eingabemittel (1) zum Aufnehmen des kontaminierten Materials und Ausgabemittel (8) zum Ausgeben von Reinigungsmaterial ohne Kontaminanten; und
Transportmittel (10, 9) zum Transportieren abgetrennter teilchenförmiger Stoffe von dem/den Trennmittel(n) (4) zu dem/den Ausgabemittel(n) (8) und von dem/den zweiten Trennmittel(n) (7) zu dem/den Ausgabemittel(n) (8).

15. Verfahren zum Verarbeiten von kontaminiertem Material in einer Direkt-Kontakt-Hoch-Temperatur-Thermo-Desorptionsvorrichtung (100), umfassend;
Ausführen von Desorption von kontaminiertem Material mit direktem Kontakt in einen Desorber (3), um Kontaminanten von dem kontaminierten Material freizusetzen;
Transportieren der freigesetzten Kontaminanten stromabwärts von der Desorption zur Oxidation über einen Transport-Kanal (202);
Ausführen der Oxidation von mindestens einem Teil der Kontaminanten in einen Oxidator (5), wobei das Verfahren weiterhin **gekennzeichnet ist durch**
Bereitstellen mindestens eines Lüfters (200), welcher zwischen dem Desorber (3) und dem Oxidator (5) angeordnet ist, zum Erzeugen von negativem Druck in dem Transport-Kanal (202) zwischen dem Desorber (3) und dem mindestens einen Lüfter (200), um die freigesetzten Kontaminanten stromabwärts von dem Desorber (3) zu bewegen; und
Bestimmen, ob die Stärke des Luft ziehenden Lüfters (200) gesenkt, erhöht oder gleich gehalten werden soll, auf der Basis der Information von mindestens einem Sensor.

## Revendications

1. Dispositif de désorption thermique haute température à contact direct (100) pour le traitement de matière contaminée, comprenant :
un moyen de désorption (3) pour effectuer la désorption de matière contaminée par contact direct pour libérer des contaminants de la matière contaminée ;
un moyen d'oxydation (5) pour effectuer l'oxydation d'au moins une partie des contaminants ;
un moyen de canalisation (202) pour transporter les contaminants libérés en aval du moyen de désorption (3) vers le moyen d'oxydation (5), le dispositif étant en outre **caractérisé en ce qu'**il comprend :
un moyen de courant d'air (200), situé entre le moyen de désorption (3) et le moyen d'oxydation (5), pour générer une pression négative dans le moyen de canalisation (202) entre le moyen de désorption (3) et le moyen de courant d'air (200) pour déplacer les contaminants libérés en aval du moyen de désorption (3) ; et
un moyen de contrôle (210) pour déterminer si la puissance du moyen de courant d'air (200) doit être diminuée, augmentée, ou maintenue inchangée, sur la base d'information d'au moins un capteur.

2. Dispositif de désorption thermique haute température à contact direct (100) selon la revendication 1, dans lequel les capteurs comprennent l'un au moins des suivants : un capteur de poids pour détecter la quantité de matière contaminée introduite, un capteur pour détecter la quantité de gaz contaminants émise, un capteur de pression pour détecter la pression dans le moyen de canalisation (202).

3. Dispositif de désorption thermique haute température à contact direct (100) selon l'une quelconque des revendications 1 à 2, dans lequel le moyen de courant d'air (200) est configuré pour déplacer les contaminants du moyen de canalisation (202) en aval vers le moyen d'oxydation (5) par la pression négative et un effet de vent provoqué par le moyen de courant d'air (200).

4. Dispositif de désorption thermique haute température à contact direct (100) selon l'une quelconque des revendications 1 à 3, dans lequel le moyen de courant d'air (200) comprend au moins un ventilateur ou au moins un souffleur.

5. Dispositif de désorption thermique haute température à contact direct (100) selon l'une quelconque des revendications 1 à 4, dans lequel le moyen de courant d'air (200) est pour contrôler la pression négative dans le moyen de canalisation (202), contrôlant ainsi l'alimentation des contaminants vers le moyen d'oxydation (5).

6. Dispositif de désorption thermique haute température à contact direct (100) selon l'une quelconque des revendications 1 à 5, dans lequel la température pour la désorption est entre 320 à 800 degrés en Celsius et la température pour l'oxydation est entre 850 à 1100 degrés en Celsius.

7. Dispositif de désorption thermique haute température à contact direct (100) selon l'une quelconque des revendications 1 à 6, dans lequel le dispositif de désorption thermique haute température à contact direct (100) comprend en outre :
un moyen de séparation (4) pour séparer des particules, qui sont suffisamment grandes selon un critère prédéterminé, des particules présentes parmi les contaminants, dans lequel le moyen de séparation (4) est situé entre le moyen de désorption (3) et le moyen d'oxydation (5).

8. Dispositif de désorption thermique haute température à contact direct (100) selon la revendication 7, dans lequel le moyen de courant d'air (200) est situé entre le moyen de désorption (3) et le moyen de séparation (4).

9. Dispositif de désorption thermique haute température à contact direct (100) selon la revendication 7, dans lequel le moyen de courant d'air (200) est situé entre le moyen de séparation (4) et le moyen d'oxydation (5).

10. Dispositif de désorption thermique haute température à contact direct (100) selon l'une quelconque des revendications 1 à 9, dans lequel le dispositif de désorption thermique haute température à contact direct (100) comprend en outre :
une soupape d'urgence (204), située en aval après le moyen de courant d'air (200), configurée pour fournir un accès direct à l'atmosphère lorsque la pression dans le dispositif de désorption thermique haute température à contact direct (100) est détectée comme étant élevée selon un critère prédéterminé.

11. Dispositif de désorption thermique haute température à contact direct (100) selon la revendication 10, dans lequel le moyen de courant d'air (200) est configuré pour continuer à générer la pression négative lorsque la soupape d'urgence (204) est ouverte, assurant ainsi que les contaminants sont enlevés en aval à distance du moyen de désorption (3).

12. Dispositif de désorption thermique haute température à contact direct (100) selon l'une quelconque des revendications 1 à 11, dans lequel le dispositif de désorption thermique haute température à contact direct (100) comprend en outre :
un deuxième moyen d'oxydation pour effectuer l'oxydation d'au moins une partie des contaminants ;
un deuxième moyen de canalisation pour transporter une partie des contaminants libérés du moyen de désorption (3) en aval vers le deuxième moyen d'oxydation (5) ; et
un deuxième moyen de courant d'air, situé entre le moyen de désorption (3) et le deuxième moyen d'oxydation (5), pour générer une pression négative dans le deuxième moyen de canalisation entre le moyen de désorption (3) et le deuxième moyen de courant d'air pour déplacer les contaminants libérés en aval du moyen de désorption (3).

13. Dispositif de désorption thermique haute température à contact direct (100) selon l'une quelconque des revendications 1 à 12, dans lequel le dispositif de désorption thermique haute température à contact direct (100) comprend en outre :
un moyen de refroidissement (6), situé après le moyen d'oxydation (5), pour refroidir la température des contaminants oxydés ;
un deuxième moyen de séparation (7), situé après le moyen de refroidissement (6), pour séparer les particules des contaminants ; et
un moyen de tirage induit (206), situé après le deuxième le deuxième moyen de séparation (7), pour générer une pression négative dans le dispositif de désorption thermique haute température (100) à contact direct.

14. Dispositif de désorption thermique haute température à contact direct (100) selon l'une quelconque des revendications 1 à 13, dans lequel le dispositif de désorption thermique haute température à contact direct (100) comprend en outre :
un moyen d'entrée (1) pour recevoir la matière contaminée and un moyen de sortie (8) pour sortir la matière propre sans contaminants ; et
des moyens de transport (10, 9) pour transporter des particules séparées à partir du moyen de séparation (4) vers le moyen de sortie (8) et à partir du deuxième moyen de séparation (7) vers le moyen de sortie (8).

15. Procédé de traitement de matière contaminée dans un dispositif de désorption thermique haute température à contact direct (100), comprenant :
effectuer la désorption de matière contaminée par contact direct dans un désorbeur (3) pour libérer des contaminants de la matière contaminée ;
transporter les contaminants libérés en aval de la désorption vers l'oxydation via un canal de transport (202) ;
effectuer l'oxydation d'au moins une partie des contaminants dans un oxydant (5), le procédé étant **caractérisé en outre par**
la fourniture d'au moins un ventilateur (200), qui est situé entre le désorbeur (3) et l'oxydant (5), pour générer une pression négative dans le canal de transport (202) entre le désorbeur (3) et le au moins un ventilateur (200) pour déplacer les contaminants libérés en aval à partir du désorbeur (3) ; et
déterminer si la puissance du ventilateur de courant d'air (200) doit être diminuée, augmentée, ou maintenue inchangée, sur la base d'informations provenant d'au moins un capteur.
